# EUROPEAN PATENT APPLICATION

(11) **EP 4 491 024 A1**
(43) Date of publication of application: **15.01.2025**
(21) Application number: 23766815.7
(22) Date of filing: 07.03.2023
(51) Int. Cl.: A01N 41/12, A01G 7/06, A01N 25/02, A01N 47/36, A01P 21/00

(54) **AGRICULTURAL COMPOSITION AND METHOD FOR CULTIVATING PLANTS USING SAME**

(30) Priority: 07.03.2022 JP 2022034052; 03.02.2023 JP 2023015411
(71) Applicant: Kaneka Corporation, Osaka-shi, Osaka 530-8288 (JP)
(72) Inventor: ASADA Takayuki, Iwata-shi, Shizuoka 438-0802 (JP); YAMANE Hiroaki, Iwata-shi, Shizuoka 438-0802 (JP); MOHRI Taku, Iwata-shi, Shizuoka 438-0802 (JP)
(74) Representative: Hoffmann Eitle
(86) International application number: PCT/JP2023/008450
(87) International publication number: WO 2023/171639

(57) **Abstract**

A problem to be addressed by one or more embodiments of the present invention is to achieve more enhanced advantageous effects, such as increased crop yield and improved stress resistance, than those achieved by applying each of glutathione and allantoin independently to a plant. One or more embodiments of the present invention relate to an agricultural composition comprising glutathione and allantoin. Another one or more embodiments of the present invention relates to a method for cultivating a plant, the method including applying glutathione and allantoin to the plant, and cultivating the plant. The glutathione is preferably oxidized glutathione.

## Description

### Technical Field

The present invention relates to an agricultural composition and a method for cultivating a plant using the same.

### Background Art

Glutathione, which is a peptide composed of three amino acids, namely, L-cysteine, L-glutamic acid, and glycine, exists in many organisms including not only humans but also other animals, plants, and microorganisms, and is a compound important for an organism in terms of active oxygen elimination, detoxication, amino acid metabolism, and the like.

In an organism, glutathione exists in either of the following forms: reduced glutathione (*N*-(*N*-γ-L-glutamyl-L-cysteinyl)glycine, hereinafter referred to as "GSH" in some cases) in which the thiol group of an L-cysteine residue has a form of reduced SH; and oxidized glutathione (hereinafter referred to as "GSSG" in some cases) having a form in which the thiol groups of the L-cysteine residues of two GSH molecules are oxidized to form a disulfide bond between the two glutathione molecules. Glutathione is known to be useful in the fields of fertilizers, medicaments, cosmetics, and the like.

On the other hand, allantoin (5-ureidohydantoin) is an intermediate product generated in a process of decomposition of a nucleobase (purine base). In a plant, allantoin is generated from 5-hydroxyisouric acid by allantoin synthase (AS) and decomposed into allantoic acid by allantoinase (ALN). Non-Patent Literature 1 discloses that an aln-1 variant strain of Arabidopsis thaliana produced by variation by destroying the ALN gene to allow allantoin accumulation in a plant has higher drought stress resistance than a wild-type strain.

Patent Literature 1 discloses a fertilizer composition to be applied to a plant leaf and a method for facilitating the growth of a plant by applying the fertilizer composition to a plant, wherein the fertilizer composition is characterized by containing an oxidized glutathione and a fertilizer component.

Patent Literature 2 discloses a method for facilitating the growth of a tuber or tuberous root of a plant, wherein oxidized glutathione is applied to a tuber-forming or tuberous root-forming plant in its flower bud-appearing stage.

Patent Literature 3 discloses a high-temperature stress resistance improving agent containing allantoin as an active component, and aimed at improving the high-temperature stress resistance of a plant.

### Citation List

### Patent Literature

Patent Literature 1: WO2017/006869
Patent Literature 2: JP2018-115116A
Patent Literature 3: WO2017/130630

### Non-Patent Literature

Non-Patent Literature 1: Watanabe, S. et.al., Plant Cell Environ. 37: 1022-1036 (2014)

### Summary of Invention

### Technical Problem

As described in Patent Literature 1 to 3, glutathione and allantoin are each known to have the effect of facilitating the growth of a plant and the effect of improving the stress resistance.

An object herein is to provide a means that provides more enhanced advantageous effects, such as increased crop yield and improved stress resistance, than those achieved by applying each of glutathione and allantoin independently to a plant.

### Solution to Problem

The present inventors have discovered that applying a combination of glutathione and allantoin to a plant synergistically achieves advantageous effects, such as increasing crop yield and improving stress resistance. Specifically, the following are disclosed as means for solving the above-described problem.
(1) An agricultural composition comprising glutathione and allantoin.
(2) The agricultural composition according to (1), wherein the glutathione is oxidized glutathione.
(3) The agricultural composition according to (1) or (2), comprising 40 parts by mass or more of the allantoin with respect to 100 parts by mass of the glutathione.
(4) The agricultural composition according to any one of (1) to (3), wherein the agricultural composition has a glutathione content of 3 mass% or more and 20 mass% or less.
(5) The agricultural composition according to any one of (1) to (4), wherein the agricultural composition has an allantoin content of 5 mass% or more and 50 mass% or less.
(6) The agricultural composition according to any one of (1) to (5), further comprising one or more selected from the group consisting of nitrogen-containing inorganic salts, phosphorus-containing inorganic salts, and potassium-containing inorganic salts.
(7) A method for cultivating a plant, comprising:
   applying glutathione and allantoin to the plant; and
   cultivating the plant.
(8) The method according to (7), wherein the glutathione is oxidized glutathione.
(9) The method according to (7) or (8), wherein the glutathione and the allantoin are applied to the plant in such a manner that the amount of the allantoin is 40 parts by mass or more with respect to 100 parts by mass of the glutathione.
(10) The method according to any one of (7) to (9), wherein one or more selected from the group consisting of nitrogen-containing inorganic salts, phosphorus-containing inorganic salts, and potassium-containing inorganic salts are applied to the plant.
(11) The method according to any one of (7) to (10), comprising applying an aqueous solution containing the glutathione to the plant.
(12) The method according to any one of (7) to (11), comprising applying an aqueous solution containing the allantoin to the plant.
(13) The method according to any one of (7) to (12), comprising applying, to the plant, an aqueous solution prepared by diluting the agricultural composition according to any one of (1) to (6) in water.
(14) The method according to any one of (7) to (13), comprising cultivating the plant under a high-temperature stress condition and/or a drought stress condition.
(15) The method according to any one of (7) to (14), wherein the plant is lettuce, broccoli, a potato, an onion, a soybean, or a grape.

The present specification encompasses the disclosure of Japanese Patent Application Nos. 2022-034052 and 2023-015411 that serve as a basis for the priority of the present application.

### Advantageous Effects of Invention

An agricultural composition and a method for cultivating a plant according to one or more embodiments of the present invention achieve advantageous synergistic effects, such as increasing crop yield and improving stress resistance.

### Brief Description of Drawing

[Figure 1] Figure 1 shows the percentages of heads of broccoli having the indicated flower bud sizes among heads of broccoli grown in a treatment section where glutathione and allantoin were applied, and a nontreatment section where neither glutathione nor allantoin was applied in Test 1 in Experiment 4.
[Figure 2] Figure 2 shows the daily number of heads of broccoli harvested and the cumulative number of heads of broccoli harvested in a treatment section or a nontreatment section in Test 2 in Experiment 4, wherein the heads of broccoli were harvested individually when the flower bud diameter reached 12 cm.
[Figure 3] Figure 3 shows the number of harvested potatoes each weighing less than 20 g or 20 g or more per m² of cultivation area in a treatment section or a nontreatment section in Experiment 5, and the total number of harvested potatoes per m² of cultivation area in a treatment section or a nontreatment section in Experiment 5.
[Figure 4] Figure 4 shows the percentages of onions having the indicated sizes among onions grown in a treatment section or a nontreatment section in Experiment 6.
[Figure 5] Figure 5 shows the percentages of the number of heads of lettuce rated 0 to 4 according to their withering or wilting in their initial stage of growth, wherein the heads of lettuce were grown in a treatment section or a nontreatment section under high-temperature and drought stress conditions in Test 1 in Experiment 7.
[Figure 6] Figure 6 shows the percentages of heads of lettuce having the indicated sizes among heads of lettuce grown in a treatment section or a nontreatment section in Test 2 in Experiment 7.
[Figure 7] Figure 7 shows the ETRs in Experiment 8.
[Figure 8] Figure 8 shows the cumulative amounts of anthocyanin in Experiment 9.

### Description of Embodiments

### <Glutathione>

The glutathione may be reduced glutathione (GSH, *N*-(*N*-γ-L-glutamyl-L-cysteinyl)glycine), oxidized glutathione (GSSG) in which two GSH molecules are bound via a disulfide bond, or a mixture of GSH and GSSG. The glutathione is preferably GSSG.

The glutathione (GSSG or GSH) may encompass various forms of glutathione, such as free forms neither bound to another substance nor ionized, salts, hydrates, and mixtures of two or more thereof.

When used as the glutathione, GSSG may be used in a mixture of GSSG and GSH, and the content of GSSG is preferably relatively larger than the content of GSH. More preferably, the total weight of GSSG (in terms of free forms) with respect to the total weight of GSSG and GSH (all in terms of free forms) is 70 mass% or more, more preferably 80 mass% or more, more preferably 90 mass% or more, still more preferably 95 mass% or more, still more preferably 98 mass% or more, most preferably 100 mass%.

A salt of GSSG is not particularly limited, provided that it is one or more salts acceptable as fertilizers, such as ammonium salts, calcium salts, magnesium salts, sodium salts, or lithium salts, and is preferably one or more salts selected from the group consisting of ammonium salts, calcium salts, and magnesium salts. Examples of the GSSG salt include monoammonium salts of GSSG, hemicalcium salts or monocalcium salts of GSSG, and hemimagnesium salts or monomagnesium salts of GSSG.

### <Allantoin>

Allantoin is also called 5-ureidohydantoin, and a free form thereof has a structure represented by the following formula.

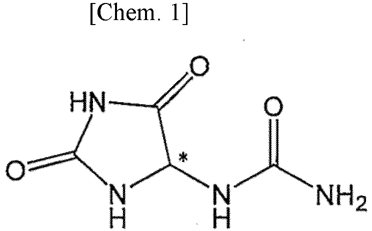

Allantoin has one asymmetric carbon (represented by * in the formula), and is in the form of (R)-allantoin or (S)-allantoin. An allantoin to be used in one or more embodiments of the present invention may be (R)-allantoin, (S)-allantoin, or a mixture thereof. The allantoin can be synthesized, for example, from glyoxylic acid and urea. Alternatively, the allantoin may be derived or obtained from a plant or a microorganism.

The allantoin may encompass various forms of allantoin, such as free forms neither bound to another substance nor ionized, salts, hydrates, and mixtures of two or more thereof.

### <Agricultural Composition>

One or more embodiments of the present invention relate to an agricultural composition comprising glutathione and allantoin.

Applying the agricultural composition to a plant such as a crop achieves advantageous effects, such as synergistically facilitating the growth of the plant, synergistically improving the resistance to high-temperature stress and/or drought stress, and enhancing the productivity of a harvest having a high commercial value.

In a more preferable embodiment, the agricultural composition comprises allantoin at preferably 40 parts by mass or more, more preferably 100 parts by mass or more, more preferably 200 parts by mass or more, more preferably 300 parts by mass or more, with respect to 100 parts by mass of glutathione. In this case, the plant growth facilitating effect and the high-temperature stress resistance and/or drought stress resistance improving effect of the glutathione and the allantoin are particularly high.

In a still more preferable embodiment, the agricultural composition comprises allantoin at preferably 2000 parts by mass or less, more preferably 1800 parts by mass or less, more preferably 1600 parts by mass or less, more preferably 1000 parts by mass or less, still more preferably 800 parts by mass or less, particularly preferably 600 parts by mass or less, most preferably 400 parts by mass or less, with respect to 100 parts by mass of glutathione.

The content of glutathione in the agricultural composition is not particularly limited, and is preferably 3 mass% or more, more preferably 5 mass% or more, preferably 40 mass% or less, more preferably 20 mass% or less, still more preferably 10 mass% or less.

The content of allantoin in the agricultural composition is not particularly limited, and is preferably 5 mass% or more, more preferably 10 mass% or more, still more preferably 20 mass% or more, preferably 50 mass% or less, more preferably 40 mass% or less, still more preferably 30 mass% or less.

The agricultural composition may be a solid composition or a liquid composition, and is preferably a solid composition from the viewpoint of storage stability.

When the agricultural composition is a solid composition, the agricultural composition may be a solid composition to be applied directly to an application site, such as soil for a plant, water, or the surface of a part of a plant (e.g., a surface of a leaf or a seed), or may be a solid composition that is diluted with water to form an aqueous solution prior to application, which is then applied to a plant. The form of the solid composition is not particularly limited, and may be an arbitrary form, such as a granular or powdery form. The agricultural composition in granular form can be produced, utilizing a granulation method such as agitation granulation or extrusion granulation.

When the agricultural composition is a liquid composition, the agricultural composition may be a liquid composition to be applied directly to an application site, such as soil for a plant, water, or the surface of a part of a plant (e.g., a surface of a leaf or a seed), or may be a liquid composition that is diluted with water to form a diluted solution prior to application, which is then applied to a plant. Examples of the liquid composition include an aqueous solution.

When the agricultural composition is a liquid composition to be applied directly to an application site, the content of glutathione may be 0.001 mass% or more and 2 mass% or less, and the content of allantoin may be 0.0015 mass% or more and 5 mass% or less. When the agricultural composition is diluted with water before use, the dilution ratio may be, for example, 5 to 10000 times or 10 to 5000 times.

The agricultural composition may comprise an inorganic salt, a binding agent, or the like in addition to glutathione and allantoin.

The inorganic salt is preferably an inorganic salt containing an element useful as a fertilizer, such as potassium, nitrogen, phosphorus, calcium, or magnesium, and is particularly preferably one or more inorganic salts selected from the group consisting of nitrogen-containing inorganic salts, phosphorus-containing inorganic salts, and potassium-containing inorganic salts.

Specific examples of the nitrogen-containing inorganic salt include ammonium sulfate and ammonium dihydrogenphosphate. Examples of the phosphorus-containing inorganic salt include ammonium dihydrogenphosphate. Examples of the potassium-containing inorganic salt include potassium sulfate.

In an embodiment in which the agricultural composition comprises glutathione, allantoin, and one or more inorganic salts selected from the group consisting of nitrogen-containing inorganic salts, phosphorus-containing inorganic salts, and potassium-containing inorganic salts, the agricultural composition comprises glutathione, allantoin, and the inorganic salt(s) in a total content of preferably 70 mass% or more, more preferably 80 mass% or more, more preferably 90 mass% or more, still more preferably 95 mass% or more, on a dry matter basis.

Examples of the binding agent include: carboxymethyl cellulose, methyl cellulose, ethyl cellulose, polyvinyl pyrrolidone, pullulan, acrylic acid-based polymer, polyvinyl alcohol, gelatin, agar, gum arabic, gum arabic powder, xanthan gum, trant gum, guar gum, gellan gum, locust bean gum, pregelatinized starch, macrogol, starch, soluble starch, dextrin, gum tragacanth, *β*-glucan, pectin, casein, soy protein, hydroxyethyl cellulose, acetyl cellulose, lignin sulfonic acid, carboxymethyl starch, hydroxyethyl starch, polyvinylmethyl ether, hydroxypropyl cellulose, hydroxypropylmethyl cellulose, polyethylene glycol, polyethylene oxide, polyvinyl pyrrolidone, shellac, rosin, tall oil, ester gum, polyvinyl acetate, polylactic acid, polyvinyl chloride, polyester, polyurea, polyamide, coumarone resin, biodegradable polymer, paraffin wax, microcrystalline wax, petrolatum, montan wax, carnauba wax, cotton wax, beeswax, lanoline, polymeric nonionic surfactants, polymeric anionic surfactants, polymeric cationic surfactants, polymeric zwitterionic surfactants, and alginic acid (which are polymer compounds); sodium silicate, glycerin, animal oil and vegetable oil, fat, liquid paraffin, heavy oil, glucose, sucrose, mannitol, sorbitol, nonpolymeric nonionic surfactants, nonpolymeric anionic surfactants, nonpolymeric cationic surfactants, and nonpolymeric zwitterionic surfactants (which are nonpolymer compounds); and salts thereof. At least one selected from the group consisting of them can be used.

An example of a particularly preferable binding agent is a binding agent of a polymer compound. At least one selected from the group consisting of carboxymethyl cellulose and salts thereof, polyvinyl alcohol, starch, gum arabic, hydroxyethyl cellulose, lignin sulfonic acid and salts thereof, and polyethylene glycol is particularly preferable. Examples of the salt of carboxymethyl cellulose include: salts of alkali metals, such as sodium, potassium, and lithium; and salts of alkaline earth metals, such as magnesium and calcium. Carboxymethyl cellulose and salts thereof conceivably contribute to improving the storage stability of glutathione in the composition. Using such a binding agent may achieve sustained release of glutathione when the agricultural composition, particularly the solid agricultural composition, is used for application to a plant. When at least one selected from the group consisting of carboxymethyl cellulose and salts thereof, polyvinyl alcohol, starch, gum arabic, hydroxyethyl cellulose, lignin sulfonic acid and salts thereof, and polyethylene glycol is used as a binding agent, the content of the binding agent with respect to the total amount of the agricultural composition on a dry matter basis can be preferably 0.5 to 5 mass%, more preferably 1 to 3 mass%.

Another example of a preferable binding agent is a nonpolymeric anionic surfactant, particularly a linear alkyl benzene sulfonic acid or a salt thereof. When a nonpolymeric anionic surfactant is used as a binding agent, the content of the binding agent with respect to the total amount of the agricultural composition on a dry matter basis can be preferably 0.3 to 3 mass%, more preferably 0.5 to 2 mass%.

The agricultural composition may further comprise water, an organic support, an excipient, or the like.

Examples of the organic support include: dry plant materials such as rice hulls, sawdust, soybean flour, corn stem, and vegetable fiber; and organic porous supports such as pulp flocs and activated carbon.

Examples of the excipient include lactose, trehalose, and cellulose.

The agricultural composition may further comprise one or a plurality of the below-described additional additives, if desired. Examples of the additive include, but are not limited to, humectants, colorants, defoamers, antifreezing agents, dispersants, preservatives, biological controlling agents, biocides, and emulsifiers.

### <Method for Cultivating Plant>

Another one or more embodiments of the present invention relate to a method for cultivating a plant, comprising:
applying glutathione and allantoin to the plant, and
cultivating the plant.

The cultivating method achieves advantageous effects, such as synergistically facilitating the growth of the plant, synergistically improving the resistance to high-temperature stress and/or drought stress, and enhancing the productivity of a harvest having a high commercial value.

In the cultivating method, glutathione and allantoin are applied to a plant in such a manner that the amount of the allantoin is preferably 40 parts by mass or more, more preferably 100 parts by mass or more, more preferably 200 parts by mass or more, more preferably 300 parts by mass or more, with respect to 100 parts by mass of glutathione. In this case, the plant growth facilitating effect and the high-temperature stress resistance and/or drought stress resistance improving effect of the glutathione and the allantoin are particularly high.

In a still more preferable embodiment of the cultivating method, glutathione and allantoin are applied to a plant in such a manner that the amount of the allantoin is preferably 2000 parts by mass or less, more preferably 1800 parts by mass or less, more preferably 1600 parts by mass or less, more preferably 1000 parts by mass or less, still more preferably 800 parts by mass or less, particularly preferably 600 parts by mass or less, most preferably 400 parts by mass or less, with respect to 100 parts by mass of glutathione.

In the cultivating method, an inorganic salt in addition to glutathione and allantoin is preferably applied to a plant.

The inorganic salt is preferably an inorganic salt containing an element useful as a fertilizer, such as potassium, nitrogen, phosphorus, calcium, or magnesium, and is particularly preferably one or more inorganic salts selected from the group consisting of nitrogen-containing inorganic salts, phosphorus-containing inorganic salts, and potassium-containing inorganic salts.

Specific examples of the nitrogen-containing inorganic salt include ammonium sulfate and ammonium dihydrogenphosphate. Examples of the phosphorus-containing inorganic salt include ammonium dihydrogenphosphate. Examples of the potassium-containing inorganic salt include potassium sulfate.

In the cultivating method, glutathione and allantoin may be applied to a plant in separate periods, or glutathione and allantoin may be applied to a plant in the same period. When glutathione and allantoin are applied to a plant in the same period, a composition comprising glutathione and allantoin may be applied to a plant, or a composition comprising glutathione and a composition comprising allantoin may be applied to a plant in the same period.

In the cultivating method, glutathione and allantoin are applied to a plant preferably by applying, to the plant, an aqueous solution containing glutathione and allantoin or an aqueous solution containing glutathione and an aqueous solution containing allantoin.

In the cultivating method, glutathione and allantoin to be applied to a plant are preferably in the form of an agricultural composition according to the above-described one or more embodiments of the present invention or in the form of an aqueous solution prepared by diluting the agricultural composition with water.

In the cultivating method, a method for applying glutathione and allantoin to a plant is not particularly limited, provided that glutathione and allantoin can come into contact with a part of a plant, such as a seed, root, stem, or leaf of a plant. Glutathione and allantoin may be applied so as to come into direct contact with the part of a plant, or glutathione and allantoin may be applied to a cultivating support, such as soil where the part of a plant has taken root. In the cultivating method, glutathione and allantoin may be applied to a plant in amounts effective for achieving desired effects, such as facilitating the growth of a plant, improving the resistance to high-temperature stress and/or drought stress, and enhancing the productivity of a harvest having a high commercial value. The amounts of application thereof may be appropriately adjusted.

A target plant in the cultivating method is not particularly limited, and may be any type of plant, such as a dicotyledon or a monocotyledon.

Examples of the dicotyledon that may be a target of application include *Pharbitis* plants, *Brassica* plants, *Solanum* plants, *Lactuca* plants, *Convolvulus* plants, *Ipomoea* plants, *Arabidopsis* plants, *Cuscuta* plants, *Dianthus* plants, *Stellaria* plants, *Minuartia* plants, *Cerastium* plants, *Sagina* plants, *Arenaria* plants, *Moehringia* plants, *Pseudostellaria* plants, *Honckenya* plants, *Spergula* plants, *Trifolium repens* plants, *Silene* plants, *Lychnis* plants, *Melandryum* plants, Caryophyllaceae plants, Casuarinaceae plants, Saururaceae plants, Piperaceae plants, Chloranthaceae plants, Salicaceae plants, Myricaceae plants, Juglandaceae plants, Betulaceae plants, Fagaceae plants, Ulmaceae plants, Moraceae plants, Urticaceae plants, Podostemaceae plants, Proteaceae plants, Olacaceae plants, Santalaceae plants, Loranthaceae plants, Aristolochiaceae plants, Mitrastemonaceae plants, Balanophoraceae plants, Polygonaceae plants, Chenopodiaceae plants, Amaranthaceae plants, Nyctaginaceae plants, Theligonaceae plants, Phytolaccaceae plants, Aizoaceae plants, Portulacaceae plants, Magnoliaceae plants, Trochodendraceae plants, Cercidiphyllaceae plants, Nymphaeaceae plants, Ceratophyllaceae plants, Ranunculaceae plants, Lardizabalaceae plants, Berberidaceae plants, Menispermaceae plants, Calycanthaceae plants, Lauraceae plants, Papaveraceae plants, Capparaceae plants, Brassicaceae plants, Droseraceae plants, Nepenthaceae plants, Crassulaceae plants, Saxifragaceae plants, Pittosporaceae plants, Hamamelidaceae plants, Platanaceae plants, Rosaceae plants, Fabaceae plants, Oxalidaceae plants, Geraniaceae plants, Linaceae plants, Zygophyllaceae plants, Rutaceae plants, Simaroubaceae plants, Meliaceae plants, Polygalaceae plants, Euphorbiaceae plants, Callitrichaceae plants, Buxaceae plants, Empetraceae plants, Coriariaceae plants, Anacardiaceae plants, Aquifoliaceae plants, Celastraceae plants, Staphyleaceae plants, Icacinaceae plants, Aceraceae plants, Hippocastanaceae plants, Sapindaceae plants, Sabiaceae plants, Balsaminaceae plants, Rhamnaceae plants, Vitaceae plants, Elaeocarpaceae plants, Tiliaceae plants, Malvaceae plants, Sterculiaceae plants, Actinidiaceae plants, Theaceae plants, Clusiaceae plants, Elatinaceae plants, Tamaricaceae plants, Violaceae plants, Flacourtiaceae plants, Stachyuraceae plants, Passifloraceae plants, Begoniaceae plants, Cactaceae plants, Thymelaeaceae plants, Elaeagnaceae plants, Lythraceae plants, Punicaceae plants, Rhizophoraceae plants, Alangiaceae plants, Melastomataceae plants, Trapaceae plants, Onagraceae plants, Haloragaceae plants, Hippuridaceae plants, Araliaceae plants, Apiaceae plants, Comaceae plants, Diapensiaceae plants, Clethraceae plants, Pyrolaceae plants, Ericaceae plants, Myrsinaceae plants, Primulaceae plants, Plumbaginaceae plants, Ebenaceae plants, Symplocaceae plants, Styracaceae plants, Oleaceae plants, Buddlejaceae plants, Gentianaceae plants, Apocynaceae plants, Asclepiadaceae plants, Polemoniaceae plants, Boraginaceae plants, Verbenaceae plants, Lamiacea plants, Solanaceae plants, Scrophulariaceae plants, Bignoniaceae plants, Pedaliaceae plants, Orobanchaceae plants, Gesneriaceae plants, Lentibulariaceae plants, Acanthaceae plants, Myoporaceae plants, Phrymaceae plants, Plantaginaceae plants, Rubiaceae plants, Caprifoliaceae plants, Adoxaceae plants, Valerianaceae plants, Dipsacaceae plants, Cucurbitaceae plants, Campanulaceae plants, and Asteraceae plants.

Examples of the monocotyledon that may be a target of application include *Spirodela* plants, *Lemna* plants, *Cattleya* plants, *Cymbidium* plants, *Dendrobium* plants, *Allium* plants, *Phalaenopsis* plants, *Vanda* plants, *Paphiopedilum* plants, Orchidaceae plants, Typhaceae plants, Sparganiaceae plants, Potamogetonaceae plants, Najadaceae plants, Scheuchzeriaceae plants, Alismataceae plants, Hydrocharitaceae plants, Triuridaceae plants, Cyperaceae plants, Arecaceae plants, Araceae plants, Eriocaulaceae plants, Commelinaceae plants, Pontederiaceae plants, Juncaceae plants, Stemonaceae plants, Liliaceae plants, Amaryllidaceae plants, Dioscoreaceae plants, Iridaceae plants, Musaceae plants, Zingiberaceae plants, Cannaceae plants, Burmanniaceae plants, and Poaceae plants.

A particularly preferable dicotyledon is an Asteraceae *Lactuca* plant, Brassicaceae *Brassica* plant, or Solanaceae *Solanum* plant. A particularly preferable Asteraceae *Lactuca* plant is lettuce, a particularly preferable Brassicaceae *Brassica* plant is broccoli, and a particularly preferable Solanaceae *Solanum* plant is a potato.

Additionally, another particularly preferable dicotyledon is a Fabaceae plant or a Vitaceae plant. A particularly preferable Fabaceae plant is a soybean, and a particularly preferable Vitaceae plant is a grape.

A particularly preferable monocotyledon is an Amaryllidaceae *Allium* plant. A particularly preferable Amaryllidaceae *Allium* plant is an onion.

That is, the target plant in the cultivating method is lettuce, broccoli, potato, onion, soybean, or grape in one of the preferable aspects, lettuce, broccoli, potato, or onion in one of the particularly preferable aspects, and soybean or grape in one of the particularly preferable aspects.

Especially for an Asteraceae *Lactuca* plant such as lettuce, the cultivating method can achieve effects such as facilitating the growth of a plant, improving the resistance to high-temperature stress and/or drought stress, and facilitating the enlargement of such a plant. In addition, especially for an Asteraceae *Lactuca* plant, such as lettuce, the cultivating method can also achieve the effect of facilitating the coloration of a crop, that is, a quality-improving effect or the like.

Especially for a Brassicaceae *Brassica* plant such as broccoli, the cultivating method can achieve effects such as facilitating the growth of a plant and facilitating an increase in the diameter of the flower bud of a plant.

Especially for a Solanaceae *Solanum* plant such as a potato, the cultivating method can achieve effects such as facilitating the growth of a plant, and facilitating the enlargement of the tuber of a plant.

Especially for an Amaryllidaceae *Allium* plant such as an onion, the cultivating method can achieve effects such as facilitating the growth of a plant, and facilitating the enlargement of the bulb (onion bulb) of a plant.

Especially for a Fabaceae plant such as a soybean, the cultivating method can achieve effects such as improving the stress resistance .

Especially for a Vitaceae plant such as a grape, the cultivating method can achieve the effect of facilitating the coloration of a crop, that is, a quality-improving effect or the like.

The condition for cultivating a plant in the cultivating method is not particularly limited. The plant is preferably cultivated under a condition generally applicable depending on the plant, and may be cultivated under a high-temperature stress condition and/or a drought stress condition. A plant to which glutathione and allantoin have been applied possesses improved resistance to high-temperature stress and drought stress, and thus, can exhibit good viability even under a high-temperature stress condition and/or a drought stress condition.

The high-temperature stress condition refers to a condition under which a part of a target plant is exposed to a temperature higher than a general growing temperature depending on the plant, for example, exposed to a temperature of 25°C or more, more specifically 30°C or more, still more preferably 50°C or less. The time per day during which a part of a plant is exposed to the high temperature is not particularly limited, and is, for example, 60 minutes or more, more specifically 90 minutes or more, more specifically 600 minutes or less.

The drought stress condition refers to a condition under which water is applied to a target plant in an amount less than the general amount of water applied depending on the plant.

### Examples

### <Experiment 1>

### <Method>

Lettuce (the cultivar: Souther) was raised in a plant incubator. Three weeks after the seeding and four weeks after the seeding, a composition comprising 15 mass% oxidized glutathione (GSSG), 10 mass% allantoin (ALN), 5 mass% ferrous material, or 15 mass% seaweed extract, or a composition comprising a combination of 15 mass% GSSG and any of 10 mass% ALN, 5 mass% ferrous material, or 15 mass% seaweed extract was applied to the lettuce. Each composition was diluted 1000-fold, and each resulting solution was applied by bottom watering.

Four weeks after the seeding, the seedling was transplanted into a pot, grown in a glass greenhouse for two weeks, and then, evaluated (repeated 9 times).

### <Results>

Assuming that the value of the total dry weight of the lettuce to which water alone was applied was 100, the total dry weight of the lettuce to which each composition was applied was expressed. The results are shown in Table 1.

Applying GSSG and allantoin in combination exhibited a higher effect of increasing the total dry weight than applying GSSG alone or allantoin alone. On the other hand, applying GSSG in combination with the ferrous material or the seaweed extract exhibited only the same effect as applying each component alone. These results indicate that applying GSSG and ALN in combination achieves a growth-facilitating effect noticeable on lettuce.

**[Table 1]**

| | - | Allantoin | Ferrous iron | Seaweed extract |
|---|---|---|---|---|
| GSSG 0% | 100 | 123 | 98 | 115 |
| GSSG 15% | 113 | 141 | 114 | 114 |

### <Experiment 2>

### <Method>

Lettuce (the cultivar: Souther) was raised in a plant incubator. Three weeks after the seeding and four weeks after the seeding, a fertilizer composition comprising 5 mass% GSSG, 10 mass% ALN, or 20 mass% ALN, a fertilizer composition comprising neither GSSG nor ALN, or a fertilizer composition comprising a combination of 5 mass% GSSG and each concentration of ALN was applied. Each fertilizer composition was diluted 1000-fold, and the resulting solution was applied by bottom watering.

Four weeks after the seeding, the seedling was transplanted into a pot, subjected to high-temperature stress at 40°C for two hours in a plant incubator, and grown for one week. Then, the seedling was transferred into a glass greenhouse, grown for one week, and then, evaluated (repeated 9 times).

### <Results>

Assuming that the value of the total dry weight of the lettuce to which the fertilizer composition comprising neither GSSG nor ALN was applied alone was 100, the total dry weight of the lettuce to which each composition was applied was expressed. The results are shown in Table 2.

Applying GSSG alone and applying ALN alone exhibited the effect of increasing the total dry weight, but applying GSSG and ALN in combination exhibited a higher effect of increasing the total dry weight than applying each component alone, i.e., exhibited a synergistic effect. These results indicate that applying a fertilizer composition comprising GSSG and ALN achieves a growth-facilitating effect noticeable on lettuce, even under a high-temperature stress condition.

**[Table 2]**

| | ALN 0% | ALN 10% | ALN 20% |
|---|---|---|---|
| GSSG 0% | 100 | 104 | 115 |
| GSSG 5% | 108 | 117 | 134 |

### <Experiment 3>

### <Method>

A GSSG ammonium salt at 5.7 mass%, allantoin at 22 mass%, inorganic salts (ammonium sulfate at 17.0 mass%, ammonium dihydrogenphosphate at 23.5 mass%, and potassium sulfate at 28.8 mass%), sodium linear alkyl benzene sulfonate at 1 mass%, and carboxymethyl cellulose at 2 mass% were mixed. To 100 parts by mass of the resulting mixture, a suitable amount (7.5 parts by mass) of water was added, and the resulting mixture was granulated using an agitation granulator (Model SPG-2, manufactured by Dalton Corporation) to obtain a granular composition. Here, the ratio of nitrogen content, phosphoric acid content, and potassium content in the granular composition was 1/1/1 as nitrogen/phosphoric acid/potassium.

### <Results>

The yield of the granular composition was 99%. Additionally, 94% of the particles that passed through a sieve having a 2 mm opening, which meant a good granulation property without a problem such as the formation of a large lump by granulation. In the following experiments, the granular composition was used.

### <Experiment 4>

### <Method>

Broccoli (the cultivar: *Ohayo)* was cultivated under customary manuring practice and pest management, and the yield was determined. In a treatment section, a 1000-fold diluted solution of a granular composition comprising GSSG and ALN was applied by irrigation one week before transplantation of a seedling into a cultivated field, and on the day of the transplantation. In a nontreatment section, a granular composition prepared by the same procedure as in Experiment 3 except that the granular composition comprised inorganic salts (52 mass% ammonium sulfate, 21.5 mass% ammonium dihydrogenphosphate, and 26.5 mass% potassium sulfate) was applied to broccoli in the same manner as in the treatment section. Here, the ratio of nitrogen content, phosphoric acid content, and potassium content in the granular composition used in the nontreatment section was also 1/1/1 as nitrogen/phosphoric acid/potassium.
Cultivation place: a cultivated field in Agri-Bio Research Center, Kaneka Corporation
Cultivation period: from August to November, 2021
Evaluation date in Test 1: November 15 (repetition of 10 heads/section × 3)
Evaluation dates in Test 2: November 15 to 24 (the maximum number of heads harvested in 10 days: 60 heads)

### <Results>

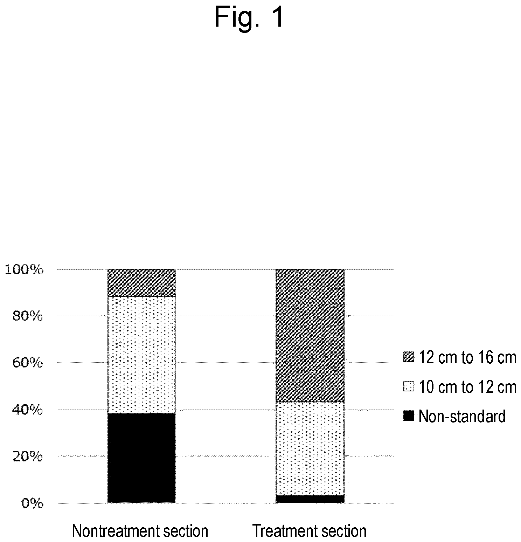

Test 1: in Test 1, the heads of broccoli harvested in the treatment section and the nontreatment section on the above evaluation dates were classified into non-standard heads (each having a flower bud diameter of less than 10 cm), heads each having a flower bud diameter of 10 cm or more and less than 12 cm, and heads each having a flower bud diameter of 12 cm or more and 16 cm or less, and the percentage of the number of heads in each class was determined. The results of Test 1 are shown in Figure 1. As shown in Figure 1, the percentage of the non-standard heads was 38% in the nontreatment section, and 2% in the treatment section, which was much smaller. Furthermore, the percentage of the high-price standard heads, i.e., the heads with a flower bud diameter of 12 cm or more and 16 cm or less, was 12% in the nontreatment section, and 57% in the treatment section, which was much larger. The results of Test 1 indicate that applying a combination of GSSG and ALN to broccoli has the effect of enhancing the productivity of broccoli having a flower bud of a high-price size.

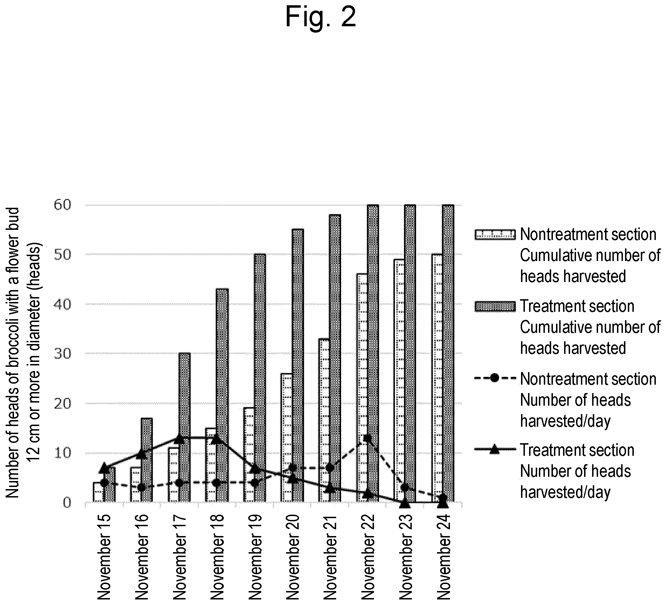

Test 2: broccoli is harvested at the optimum time for harvesting, i.e., when the flower bud diameter has reached 12 cm. A shortened harvest period creates a high value. In addition, an earlier harvest date allows for a higher-price shipment, depending on the season. Accordingly, in Test 2, heads of broccoli were harvested individually in the treatment section and the nontreatment section when the flower bud diameter reached 12 cm, and the daily number and the cumulative number of heads of broccoli harvested were counted. The results of Test 2 are shown in Figure 2. As shown in Figure 2, for example, it took 10 days to harvest 50 heads in the nontreatment section, but only 5 days in the treatment section, reducing the harvest period by 5 days. Additionally, 100% of the heads in the treatment section reached a flower bud diameter of 12 cm or more during the harvest period, while only 83% of the heads in the nontreatment section reached a flower bud diameter of 12 cm or more, meaning that the number of high-price size heads was increased in the treatment section. Furthermore, the peak harvest day was 4 to 5 days earlier in the treatment section. The results of Test 2 indicate that applying a combination of GSSG and ALN to broccoli has the effect of reducing labor by shortening the harvest period and the effect of increasing the yield of heads with high-price sizes.

### <Experiment 5>

### <Method>

Potatoes (the cultivar: *Konahime)* as a raw material for starch were cultivated under customary manuring practice and pest management, and the yield was determined. In a treatment section, a 2000-fold diluted aqueous solution of a granular composition comprising GSSG and ALN (diluted with water) was sprayed on the leaves of potatoes at the stolon elongation stage, the flower-bud-appearing stage, the initial flowering stage, and the active flowering stage. In a nontreatment section, water alone was applied to potatoes in the same manner as in the treatment section.
Cultivation place: a cultivated field in Hokkaido
Cultivation period: from May to September, 2021
Evaluation date: September 15
Repetition: 20 heads/section × 6

### <Results>

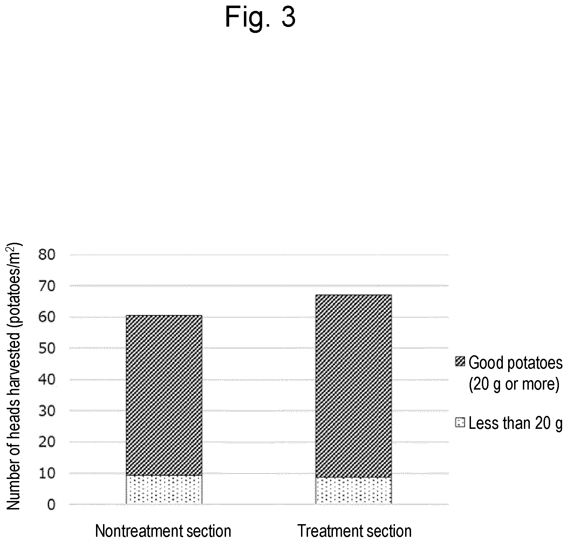

The potatoes harvested in the treatment section and the nontreatment section on the above evaluation date were classified into potatoes weighing less than 20 g each (waste potatoes) and potatoes weighing 20 g or more each (good potatoes). The number of each class of potatoes harvested per m² of the cultivation area and the total number of potatoes harvested per m² of the cultivation area were determined. The results are shown in Figure 3. The number of good potatoes harvested was 51.3 per m² in the nontreatment section, and 58.2 per m² in the treatment section, increasing the yield by 13%. Furthermore, the number of waste potatoes weighing less than 20 g each was 6% smaller in the treatment section than in the nontreatment section, while the number of good potatoes (weighing 20 g or more each) was 13% larger in the treatment section than in the nontreatment section, indicating that applying a combination of GSSG and ALN to potatoes has the effect of increasing the yield of potatoes within standards, which is directly related to value.

### <Experiment 6>

### <Method>

Onions (the cultivar: Bullet bear) were cultivated under customary manuring practice and pest management, and the yield was determined. In a treatment section, a 1000-fold diluted aqueous solution of a granular composition comprising GSSG and ALN (diluted with water) was sprayed on the leaves of onions in the initial swelling stage and the final swelling stage. In a nontreatment section, water alone was applied to onions in the same manner as in the treatment section.
Cultivation place: a cultivated field in Hokkaido
Cultivation period: from April to August, 2021
Evaluation date: August 5
Evaluation number: 200 onions/section

### <Results>

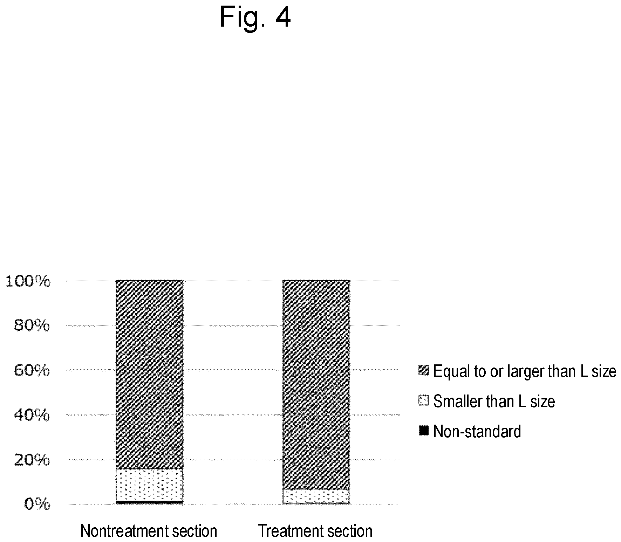

The onions harvested in the treatment section and the nontreatment section on the above evaluation date were classified into non-standard onions (less than 5 cm), onions smaller than the L size (5 cm or more and less than 7 cm), and onions equal to or larger than the L size (7 cm or more), and the percentage of the number of onions in each class was determined. The results are shown in Figure 4. As shown in Figure 4, the percentages of the non-standard onions and the onions smaller than the L size was lower, and the percentage of the onions equal to or larger than the L size, which was in a high-price range, was 9.5% higher in the treatment section than in the nontreatment section. This result indicates that applying a combination of GSSG and ALN to onions has the effect of increasing the yield of onions with high-price sizes.

### <Experiment 7>

### <Method>

Lettuce (the cultivar: Cisco) was cultivated under customary manuring practice and pest management, and the yield was determined. In a treatment section, a 1000-fold diluted aqueous solution of a granular composition comprising GSSG and ALN (diluted with water) was applied by irrigation one week before transplantation of a lettuce seedling into a cultivated field, and on the day of the transplantation. In a nontreatment section, water alone was applied to lettuce in the same manner as in the treatment section.
Cultivation place: a cultivated field in Agri-Bio Research Center, Kaneka Corporation
Cultivation period: from September to December, 2021
Transplantation date: October 4
Evaluation date in Test 1: October 7
Evaluation date in Test 2: December 10
Repetition: 20 heads/section × 3

### <Results>

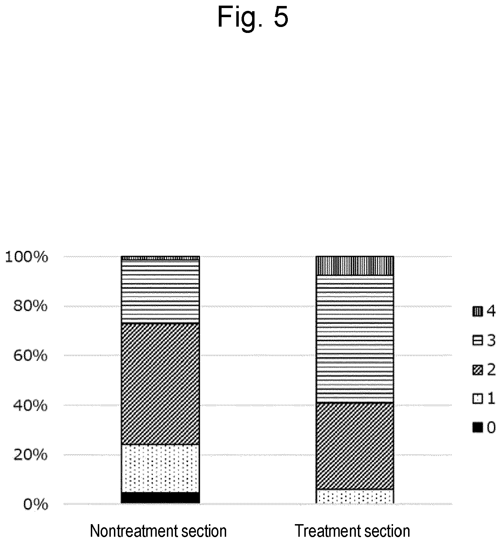

Test 1: after transplantation into the cultivated field, a high-temperature drought condition continued. Accordingly, the lettuce was intentionally allowed to be cultivated under the stress conditions, and the resistance to the high-temperature stress and the drought stress was evaluated. After the plantation, the lettuce was watered, then not watered, and then watered one hour before the evaluation. On the above evaluation date, the heads of lettuce were observed. Each head was rated, assuming that the head with 0 withered leaves had a rating of 4, 1 withered leaf had a rating of 3; 2 withered leaves had a rating of 2; 3 withered leaves had a rating of 1; and 4 withered leaves had a rating of 0. The percentages of the number of heads with each rating in the nontreatment section and the treatment section are shown in Figure 5. As shown in Figure 5, the percentages of heads with higher ratings in the treatment section were higher than in the nontreatment section, indicating that the number of withered leaves was lower in the treatment section. The average score in the nontreatment section was 2, and the average score in the treatment section was 2.6, which was significantly higher than in the nontreatment section. The results of Test 1 indicate that applying a combination of GSSG and ALN to lettuce improves resistance to stress after transplantation.

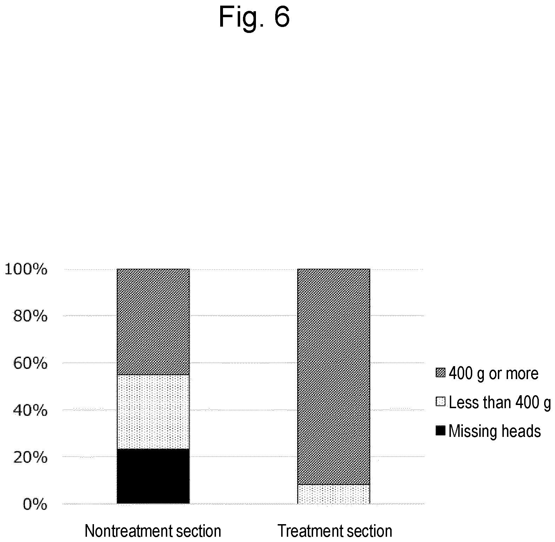

Test 2: the heads from Test 1 continued to be grown until the optimum time for harvesting, and the yield was determined on the above evaluation date. The heads of lettuce in the treatment section and the nontreatment section on the above evaluation date were classified into missing heads (that withered and died during cultivation, and were not harvested), heads weighing less than 400 g each, and heads weighing 400 g or more each. The percentage of the number of heads in each class was determined. The results are shown in Figure 6. As shown in Figure 6, in the nontreatment section, there were many missing heads, and the percentage of high-priced heads weighing 400 g or more was 45%. In contrast, in the treatment section, there were no missing heads, and the percentage of heads weighing 400 g or more was 92%, which was significantly higher. The results of Test 2 indicate that applying a combination of GSSG and ALN to lettuce has the effect of keeping lettuce healthy even under stress after transplantation, and increasing the yield of a high-priced crop.

### <Experiment 8>

### <Method>

Culture soil was put in a 9 cm plastic pot, and seeded with three soybeans (*Fukuyutaka*). After the seeding, the soybeans were grown in an incubator set for a light period (6:00-18:00, at a temperature of 26°C and an illuminance of 120 µmol/m²·s) and a dark period (18:00-6:00, at a temperature of 18°C). After germination, the strains were thinned out to one.

After the first leaf was spread out, a 1000-fold diluted solution of each composition shown in Table 3 was sprayed on the leaf of each strain. The compositions were prepared by the same procedure as in Experiment 3. The composition without at least one component of GSSG or ALN was prepared by the same procedure as in Experiment 3, except that the component was not used as a raw material. The ratio of nitrogen content, phosphoric acid content, and potassium content in each of the compositions comprising inorganic salts was 1/1/1 as nitrogen/phosphoric acid/potassium. Twenty-four hours after the spraying on the leaf, an aqueous paraquat solution diluted 5,000-fold with added SILWET L-77 was sprayed on the leaf of each strain (paraquat application), except in the Control section (T1).

Twenty-four hours after the paraquat application, electron transfer rate (ETR) was measured by PAM (pulse amplitude modulated) fluorometry.

### <Results>

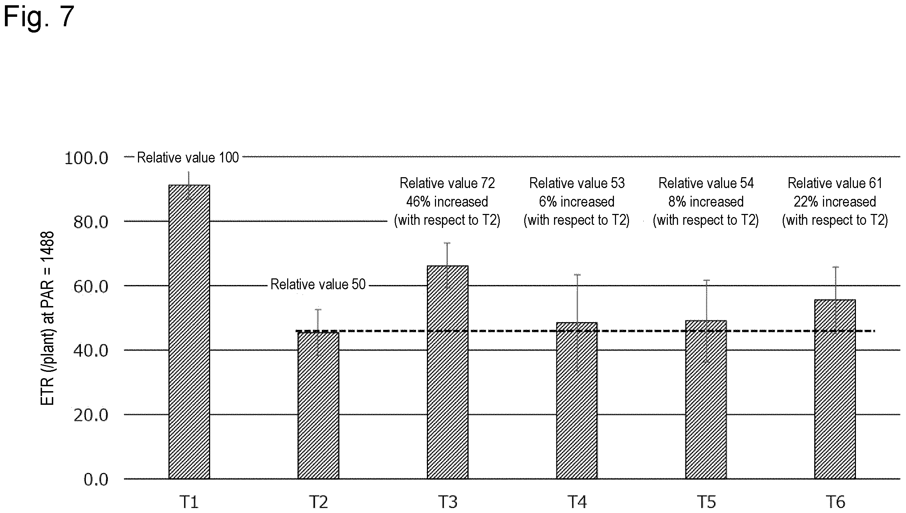

The ETRs with a PAR set at 1488 are shown in Figure 7. As obvious from Figure 7, the ETR in T2, where water, which had no ROS (reactive oxygen species) reducing effect, was sprayed, was much lower than in T1 due to the paraquat application. It is known that paraquat application generates ROS, and therefore, the difference between T1 and T2 would be due to the paraquat application. On the other hand, T3, where the granular composition comprising GSSG and ALN was sprayed, showed a higher ETR than T2, indicating that the ROS in T3 were less than in T2. T4 to T6, where inorganic salts, ALN + inorganic salts, and GSSG + inorganic salts were sprayed, respectively, showed a higher ETR than T2, but the ROS reducing effect in T4 to T6 was not as remarkable as that in T3. These results indicate that a combination of GSSG and ALN has a high synergistic effect, i.e., a high ROS reducing effect. It is known that a plant generally generates ROS in its body when exposed to any type of stress, and that excessive ROS is harmful to the plant. Based on the reduction in ETR, it is considered that the application of a composition comprising GSSG and ALN, which has the ROS reducing effect, would improve the stress resistance of a plant.

**[Table 3]**

| Treatment section | Number | Composition |
|---|---|---|
| T1 Control section | 2 strains | - |
| T2 | 4 strains | Water |
| T3 | 4 strains | Composition comprising GSSG, ALN, and inorganic salts |
| T4 | 4 strains | Composition comprising inorganic salts |
| T5 | 4 strains | Composition comprising ALN and inorganic salts |
| T6 | 4 strains | Composition comprising GSSG and inorganic salts |

### <Experiment 9>

### <Method>

A grape VR cell was cultured in an LS agar culture medium, and the cumulative amount of anthocyanin was measured. The solution for each treatment section as shown in Table 4 was delivered into the cell cluster by drops in an amount of 10 µL at the beginning of the culture, and in an amount of 100 µL on the 3rd day of culture. The amount of anthocyanin was measured on the 11th day of culture. The culture was performed at 27°C under light irradiation.

### <Results>

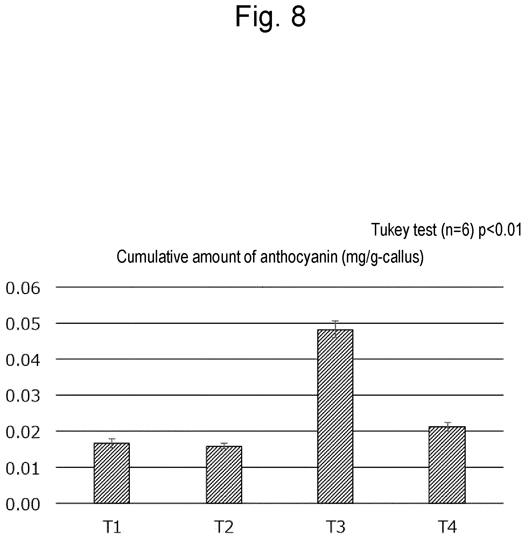

Figure 8 shows the cumulative amounts of anthocyanin under the respective treatment conditions. As obvious from Figure 8, a combination of GSSG and ALN resulted in a statistically significant increase in the cumulative amount of anthocyanin. Considering the fact that neither GSSG alone nor ALN alone affected the cumulative amount of anthocyanin, it was revealed that a combination of GSSG and ALN achieved a noticeable synergistic effect to increase the cumulative amount of anthocyanin. Based on this result, it is expected that the application of a combination of GSSG and ALN would have an effect of facilitating the coloration of a crop, i.e., a quality-improving effect.

**[Table 4]**

| Treatment section | GSSG (%) | ALN (%) |
|---|---|---|
| T1 | 0 | 0 |
| T2 | 0.1 | 0 |
| T3 | 0.1 | 0.4 |
| T4 | 0 | 0.4 |

### <Experiment 10>

### <Method>

Culture soil was put in a 9 cm plastic pot, and seeded with lettuce (the cultivar: Lollo Rosso or Red Oak). After the seeding, the lettuce was grown in an environmentally controlled greenhouse set at 28°C during the daytime and at 18°C during the nighttime. Three weeks after the seeding, each test solution shown in Table 5 was sprayed on the leaves at approximately 1 g/head. One week after the spraying, the appearance of the lettuce was visually observed , and the degree of coloration was evaluated. The evaluation was based on a comparison with T1 (the control). The same degree of coloration as T1 was rated CC, slightly more coloration than T1 was rated BB, and much more coloration than T1 was rated AA.

### <Results>

The results of the coloration evaluation under each treatment condition are shown in Table 5. The results have revealed that a combination of GSSG and ALN has an effect of facilitating coloration, as shown in Table 5. Considering the fact that GSSG alone and ALN both had less effect than a combination of GSSG and ALN, it was confirmed that the combination of GSSG and ALN had the synergistic effect. Based on this result, it is expected that the application of a combination of GSSG and ALN would have an effect of facilitating the coloration of a crop, i.e., a quality-improving effect.

**[Table 5]**

| Treatment section | GSSG (%) | ALN (%) | Lollo Rosso | Red Oak |
|---|---|---|---|---|
| T1 | 0 | 0 | - | - |
| T2 | 0.125 | 0 | CC | BB |
| T3 | 0.125 | 0.5 | AA | AA |
| T4 | 0 | 0.5 | BB | BB |

All publications, patents, and patent applications cited herein are incorporated herein by reference in their entirety.

The upper and/or lower limits of the numerical ranges herein may be arbitrarily combined to define a preferred range. For example, any upper limit and any lower limit of the numerical ranges may be combined to define a preferred range. Any upper limits of the numerical ranges may be combined to define a preferred range. Any lower limits of the numerical ranges may be combined to define a preferred range. A numerical range described herein with the term "to" includes the values presented before and after the term "to" as a lower limit and an upper limit, respectively.

It should be understood that throughout the present description, expressions in the singular include the plural, unless otherwise specified. Accordingly, the singular articles (e.g., "a", "an", and "the" in English) include plural references unless otherwise specified.

Although the present embodiments are described in detail above, the specific configuration is not limited to these embodiments, and the present disclosure encompasses any design modification within the scope which does not depart from the spirit of the present disclosure.

## Claims

1. An agricultural composition comprising glutathione and allantoin.

2. The agricultural composition according to claim 1, wherein the glutathione is oxidized glutathione.

3. The agricultural composition according to claim 1 or 2, comprising 40 parts by mass or more of the allantoin with respect to 100 parts by mass of the glutathione.

4. The agricultural composition according to any one of claims 1 to 3, wherein the agricultural composition has a glutathione content of 3 mass% or more and 20 mass% or less.

5. The agricultural composition according to any one of claims 1 to 4, wherein the agricultural composition has an allantoin content of 5 mass% or more and 50 mass% or less.

6. The agricultural composition according to any one of claims 1 to 5, further comprising one or more selected from the group consisting of nitrogen-containing inorganic salts, phosphorus-containing inorganic salts, and potassium-containing inorganic salts.

7. A method for cultivating a plant, comprising:
applying glutathione and allantoin to the plant; and
cultivating the plant.

8. The method according to claim 7, wherein the glutathione is oxidized glutathione.

9. The method according to claim 7 or 8, wherein the glutathione and the allantoin are applied to the plant in such a manner that the amount of the allantoin is 40 parts by mass or more with respect to 100 parts by mass of the glutathione.

10. The method according to any one of claims 7 to 9, wherein one or more selected from the group consisting of nitrogen-containing inorganic salts, phosphorus-containing inorganic salts, and potassium-containing inorganic salts are applied to the plant.

11. The method according to any one of claims 7 to 10, comprising applying an aqueous solution containing the glutathione to the plant.

12. The method according to any one of claims 7 to 11, comprising applying an aqueous solution containing the allantoin to the plant.

13. The method according to any one of claims 7 to 12, comprising applying, to the plant, an aqueous solution prepared by diluting the agricultural composition according to any one of claims 1 to 6 in water.

14. The method according to any one of claims 7 to 13, comprising cultivating the plant under a high-temperature stress condition and/or a drought stress condition.

15. The method according to any one of claims 7 to 14, wherein the plant is lettuce, broccoli, a potato, an onion, a soybean, or a grape.
